# EUROPÄISCHE PATENTSCHRIFT

(11) **EP 0 823 434 B1**
(45) Veröffentlichungstag und Bekanntmachung des Hinweises auf die Patenterteilung: **12.03.2003**
(21) Anmeldenummer: 97111421.0
(22) Anmeldetag: 07.07.1997
(51) Int. Cl.: C07F 7/12, C07F 7/14

(54) **Verfahren zur kontinuierlichen Herstellung von 3-Halogen-Propyl-Organosilanen**
Process for the continuous production of 3-halopropyl-organosilanes
Procédé pour la préparation continue de 3-halo-propyl organosilanes

(30) Priorität: 09.08.1996 DE 19632157
(43) Veröffentlichungstag der Anmeldung: 11.02.1998
(73) Patentinhaber: Degussa AG, 40474 Düsseldorf (DE)
(72) Erfinder: Bade, Stefan, Dr., 45721 Haltern (DE); Schön, Uwe, Dr., 79618 Rheinfelden (DE); Burkhard, John, 79618 Rheinfelden (DE); Bollenrath, Franz-Michael, Dr., 45772 Marl (DE); Hofmann, Norbert, 79713 Bad Säckingen (DE); Korte, Hermann-Josef, Dr., 45721 Haltern (DE); Rauleder, Hartwig, Dr., 79618 Rheinfelden (DE); Tanger, Uwe, Dr., 44879 Bochum (DE)

(56) Entgegenhaltungen:
- DE-A- 3 404 703
- DE-A- 4 119 994
- DE-C- 2 815 316

## Beschreibung

Die Erfindung betrifft ein Verfahren zur kontinuierlichen Herstellung von Organosiliciumverbindungen vom Typ der 3-Halogen-Propyl-Organosilane der allgemeinen Struktur (III):

R_{b}H_{3-a-b}XₐSiCH₂CH₂CH₂Y (III),

wobei:
R für CH₃, C₂H₅, C₃H₇, OCH₃, OC₂H₅ oder OC₃H₇ steht,
X für F, Cl, Br oder I steht,
Y für F, Cl, Br oder I steht und wobei
a und b jeweils für eine der Zahlen 0, 1, 2 oder 3 stehen und in der Summe a + b gleich 1, 2 oder 3 sind.

3-Halogen-Propyl-Organosilane sind wichtige technische Zwischenprodukte in der Organosilanchemie. Die Endprodukte, die aus den 3-Halogen-Propyl-Organosilanen hergestellt werden, finden ihren Einsatz als Haftvermittler bei Verbundmaterialien z. B. in der Lack- und Glasfaserindustrie, in der Gießereitechnik und der Klebstoffindustrie; weitere Anwendungsgebiete sind Elastomere und Dichtungsmassen. Als Anwendungsbeispiele sind silanisierte Glasfasern, Teilchen-verstärkte Kunststoffsysteme, kieselsäuregefüllte Gummiartikel, z. B. Reifen, die Modifizierung hydroxyfunktionalisierter Oberflächen, die Substratimmobilisierung, die Silanpolykondensation und Bautenschutzmittel zu nennen.

Die Herstellung von 3-Halogen-Propyl-Organosilanen erfolgt durch vorzugsweise kontinuierliche katalysierte Umsetzung eines Allylhalogenids (II) mit einem wenigstens ein H-Atom tragenden Silan (I) und kann durch folgende allgemeine Reaktionsgleichung beschrieben werden:

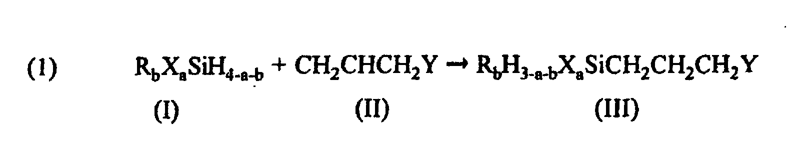

Diese Hydrosilylierungsreaktion wird stets von einer unerwünschten Nebenreaktion begleitet, die durch einen Wasserstoff-Halogen-Austausch beschrieben werden kann und bei der das Nebenprodukt Propen (V) entsteht:

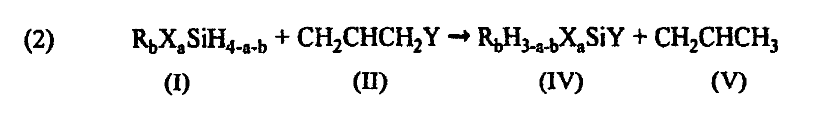

Das in dieser Reaktion entstehende Propen (V) vermag mit dem eingesetzten Organosilan (I) zum unerwünschten Nebenprodukt eines Propyl-Organosilans (VI) weiter zu reagieren: 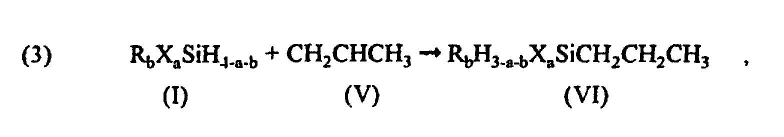 wodurch die Ausbeute des Herstellungsprozesses an 3-Halogen-Propyl-Organosilanen zu Gunsten des nicht nutzbaren Propyl-Organosilans (VI) verringert wird.

Mit X = Y = Cl, b = 0 und a = 3 kann die Herstellung von 3 -Chlorpropyltrichlorsilan (CPTCS) aus Trichlorsilan (TCS) und Allylchlorid (AC) analog zu den Gleichungen (1) bis (3) beschrieben werden. Man erhält als Reaktionsgleichung: 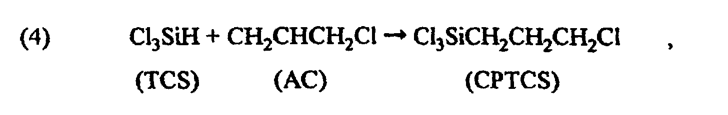 als Gleichung für die Nebenreaktion 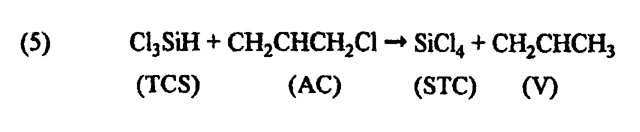 und
als Folgereaktion 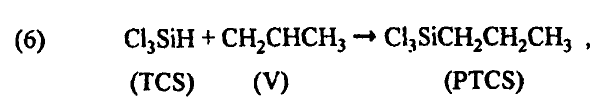 bei der aus Trichlorsilan und Propen das unerwünschte Propyltrichlorsilan (PTCS) entsteht.

Die Umsetzung von Allylchlorid mit Trichlorsilan erfolgt in flüssiger Phase gewöhnlich entweder an einem heterogenen Katalysator oder in Gegenwart eines homogenen Katalysators.

Aus DE 41 19 994 A1 ist ein Verfahren zur Herstellung von 3-Chlorpropylsilanen bekannt, in dem die Bildung des unerwünschten Nebenproduktes Propylsilan bei aufwendiger Verfahrensführung durch einen bevorzugt mindestens dreifachen molaren Allylchlorid-Überschuß verringert wird. Das zumindest Allylchlorid enthaltende Reaktionsgemisch wird dabei verdampft, kondensiert und anschließend zusammen mit gegebenenfalls zudosiertem Hydrogensilan über einen Katalysator geleitet, wobei im Zulauf zum Katalysator ein stöchiometrischer Allylchlorid-Überschuß eingehalten wird.

Aus DE 34 04 703 A1 ist ein Verfahren zur Herstellung von 3-Chlorpropyltrichlorsilan (CPTCS) in verbesserter Ausbeute bekannt. Dabei wird die Reaktion von Allylchlorid und Trichlorsilan mit speziellen hochselektiven Pt-Katalysatoren gemäß DE 34 04 702 A1 unter gleichzeitiger Abtrennung von Propen durchgeführt, so daß sich eine verbesserte Selektivität zum CPTCS ergibt. Die verbesserte Selektivität wird im wesentlichen durch den Einsatz der sehr aufwendigen, speziellen Hydrosilylierungskatalysatoren nach DE 34 04 702 A1 erzielt. Während herkömmliche Verfahren einen hohen Trichlorsilan-Überschuß benötigen, um eine vollständige Allylchlorid-Umsetzung zu erzielen, werden in DE 34 04 703 A 1 vollständige Allylchlorid-Umsätze schon bei geringem Trichlorsilan-Überschuß erreicht.

Dieser Trichlorsilan-Überschuß begünstigt aber in bezug auf (noch) vorhandenes Propen die Folgereaktion zum unerwünschten Nebenprodukt Propyltrichlorsilan, was auch verallgemeinert für die 3-Halogen-Propyl-Organosilanherstellung mit dem unerwünschten Nebenprodukt Propyl-Organosilan (VI) gilt.

Aufgabe der vorliegenden Erfindung ist es daher, ein möglichst einfaches Verfahren zur kontinuierlichen Herstellung von 3-Halogen-Propyl-Organosilanen der eingangs genannten allgemeinen Struktur (III) - und darunter speziell von CPTCS und CPMDCS (3-Chlorpropyl-Methyldichlorsilan)- in hoher Ausbeute auf der Basis auch einfacher, herkömmlicher Katalysatoren bereitzustellen, bei dem die Bildung des nicht nutzbaren Propyl-Organosilans (VI) so weit wie möglich unterdrückt wird.

Überraschenderweise wird diese Aufgabe gemäß Patentanspruch 1 gelöst durch ein Verfahren zur kontinuierlichen Herstellung von 3-Halogen-Propyl-Organosilanen der allgemeinen Struktur

R_{b}H_{3-a-b}XₐSiCH₂CH₂CH₂Y (III),

wobei:
R für CH₃, C₂H₅, C₃H₇, OCH₃, OC₂H₅ oder OC₃H₇ steht,
X für F, Cl, Br oder I steht,
Y für F, Cl, Br oder I steht und wobei
a und b jeweils für eine der Zahlen 0, 1, 2 oder 3 stehen und in der Summe a + b gleich 1, 2 oder 3 sind,
durch Umsetzung eines Allylhalogenids mit einem wenigstens ein H-Atom tragenden Silan und Abtrennung von entstandenen Propan, das dadurch gekennzeichnet ist, daß die Reaktion mit einem Teilumsatz der Edukte von ca. 10 bis 80 % bezogen auf die Unterschußkomponente durchgeführt wird. Vorzugsweise beträgt der Teilumsatz zwischen 30 % und 60 % bezogen auf die Unterschußkomponente.

Die Einstellung des gewünschten Teilumsatzes der Edukte erfolgt auf dem Fachmann an sich bekannte Weise. So kann bei bekannter Reaktionskinetik der Teilumsatz durch Variation der Reaktionstemperatur und/oder Variation der Verweilzeit des Reaktionsgemisches im Reaktor in Abhängigkeit von der eingesetzten Menge der aktiven Metallkomponente im Katalysator verändert bzw. eingestellt werden. Die Verweilzeit im Reaktor wird dabei bei konstantem Reaktorvolumen wegen der kontinuierlichen Reaktionsführung durch den Mengenstrom der Edukte bestimmt. Vorzugsweise wird der gewünschte Teilumsatz ausgehend von der Reaktionskinetik, der Katalysatormenge und einer bestimmten gewünschten Reaktionstemperatur durch Vorgabe der zugehörigen Verweilzeit eingestellt.

Überraschenderweise führt das Einhalten nur eines Teilumsatzes der Edukte zu einer insgesamt verbesserten Ausbeute an 3-Halogen-Propyl-Organosilanen. Zwar verläuft die stets parallel auftretende Nebenreaktion gemäß Gleichung (2) in annähernd gleichem Umfang, doch wird die Folgereaktion des in der Nebenreaktion gebildeten Propens mit dem eingesetzten Silan durch den nur teilweisen Umsatz der Edukte und die damit verbundene höhere Verfügbarkeit an Allylhalogenid zurückgedrängt, so daß die Bildung des unerwünschten Nebenproduktes Propyl-Organosilans (VI) sinkt und die Ausbeute an Wertprodukt steigt.

Dieses Ergebnis kann weiter verbessert werden, indem das in der Nebenreaktion gebildete Propen aus dem Reaktionsgemisch abgetrennt wird. Dadurch wird das Ausmaß der Folgereaktion weiter reduziert. Die Abtrennung des Propens kann simultan im Reaktor oder dem Reaktor nachgeschaltet mittels zumindest einer Trennstufe erfolgen.

Zwar kann erfindungsgemäß das molare Verhältnis der Edukte Silan zu Allylhalogenid zwischen etwa 0,5 und 1,5 liegen; vorzugsweise wird jedoch mit einem maßvollen Überschuß des Allylhalogenids gearbeitet. Es wurde nämlich weiterhin gefunden, daß auch durch eine Erhöhung der Allylhalogenidkonzentration im Eduktzulauf - und damit im Reaktionsgemisch - die Folgereaktion von eingesetztem Silan mit vorhandenem Propen zurückgedrängt werden kann. Es ist daher vorteilhaft, den Einsatz eines Allylhalogenid-Überschusses mit den bisherigen Maßnahmen zu kombinieren. Hierbei ist der bevorzugte Allylhalogenid-Überschuß deutlich geringer als der in DE 41 19 994 A1 beschriebene bevorzugte Allylchlorid-Überschuß von mindestens 3 : 1.

Das erfindungsgemäße Verfahren kann homogen- oder heterogen-katalysiert ausgeführt werden. Geeignet sind im allgemeinen alle bekannten Katalysatoren für gattungsgemäße Reaktionen, insbesondere auch einfache Katalysatoren. Heterogene Katalysatoren werden wegen des Vorteils der leichten Abtrennbarkeit bevorzugt. Es wird erfindungsgemäß bevorzugt ein einfacher heterogener Pt-Katalysator auf Aktivkohle eingesetzt, der zwischen 0,01 und 1 Gew.-% Pt enthält. Die Reaktionstemperatur liegt in der Regel zwischen 60 und 160 °C, vorzugsweise zwischen 80 und 140 °C. Der Druck beträgt gewöhnlich zwischen 0 und 2 MPa absolut, bevorzugt zwischen 0,3 und 1,4 MPa absolut, um die Einsatzstoffe in flüssiger Phase zu halten.

Als Reaktoren kommen erfindungsgemäß alle herkömmlichen, dem Fachmann vertrauten Reaktionsapparate für homogene Reaktionen in flüssiger Phase wie z. B. Rührkessel, Kreislaufreaktoren etc. oder Reaktoren für Flüssig-Fest-Kontakte wie z. B. Festbettreaktoren in Betracht. Die Auswahl des Reaktors bestimmt sich nach den im Einzelfall durch die Reaktion gegebenen Verhältnissen (einschließlich des ausgewählten Katalysators).

Wie bereits erwähnt, erfolgt vorzugsweise zunächst zumindest eine Abtrennung von Propen aus dem Reaktionsgemisch bzw. Produktgemisch. Ziel ist es, Propen möglichst vollständig zu entfernen. Das verbleibende Reaktionsproduktgemisch kann in einer weiteren bevorzugten Ausgestaltung des erfindungsgemäßen Verfahrens anschließend in das Wertprodukt, unerwünschte Nebenprodukte und nicht umgesetzte Edukte zerlegt werden, wobei die nicht umgesetzten Edukte bevorzugt zum Reaktor zurückgeführt werden. Die Trennung des Produktgemisches erfolgt z. B. destillativ auf dem Fachmann bekannte Weise. Die Abtrennung des Propens kann aber auch nicht gezielt, sondern indirekt als Folge einer Separierung des Wertproduktes und gegebenenfalls nicht umgesetzter Edukte aus dem Produktgemisch stattfinden. Abgetrenntes Propen wird vorzugsweise einer geeigneten Verwertung zugeführt, Z. B. der Herstellung von Allylhalogenid.

Insbesondere die bevorzugten Ausgestaltungen des erfindungsgemäßen Verfahrens zeichnen sich durch eine weitestgehende Ausnutzung der Edukte zur Umsetzung in Wertprodukt und eine hohe Wirtschaftlichkeit aus. Der größte Teil der Nicht-Wertprodukte wird durch Aufarbeitung und Rückführung einer Wiederverwertung zugeführt; der Anfall nicht verwertbarer Produkte aus der Neben- und Folgereaktion wird durch den Teilumsatz der Edukte, das bevorzugte Abtrennen von Propen und den bevorzugten Einsatz eines Allylhalogenid-Überschusses so gering wie möglich gehalten. Insgesamt lassen sich so um ca. 10 % verbesserte Selektivitäten von ca. 75 % bezüglich des umgesetzten Allylhalogenids erreichen. Weitere Selektivtäts- und Ausbeuteverbesserungen können ausgehend vom erfindungsgemäßen Verfahren durch den Einsatz spezieller Katalysatorsysteme (vgl. z. B. DE 34 04 703 A1) erzielt werden. Durch die erfindungsgemäß bevorzugt eingehaltenen Reaktionstemperaturen von unter 140 °C, die vorzugsweise auch im Zuge der Produktaufarbeitung nicht überschritten werden, ist das Produktgemisch weitestgehend frei an sonstigen Verunreinigungen, sofern diese nicht bereits mit den Edukten eingebracht wurden. Insbesondere beträgt der Anteil an Hochsiedern, die bei hohen Temperaturen z. B. durch Oligomerisierung des Allylhalogenids oder durch Disproportionierung des produzierten Silans mit entsprechenden Folgereaktionen entstehen können, im Produktgemisch nur weniger als 0,1 Gew.-%, sofern die Edukte frei an Hochsiedern sind.

Ein weiterer Vorteil des erfindungsgemäßen Verfahrens gegenüber Verfahren, die mit Homogen-Katalysatoren oder Suspensionskatalysatoren (vgl. z. B. DE 34 04 703 A1) durchgeführt werden, ist der, daß bei Einsatz eines heterogenen Katalysators keine Aktivitätsverluste aufgrund von Katalysatorverlusten auftreten. Bei Homogen- oder Suspensions-Katalysatoren, die in einem kontinuierlichen Prozeß eingesetzt werden, wird stetig Katalysator mit ausgetragen, so daß die Kosten für den Katalysator höher sind, als bei heterogen-katalytischer Fahrweise.

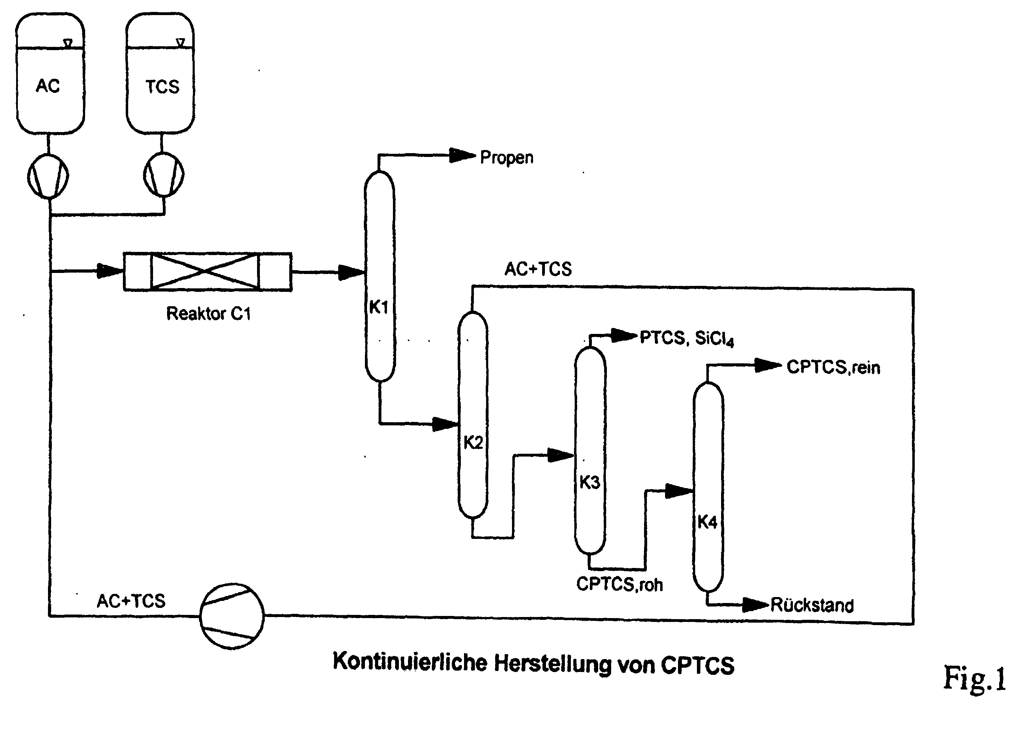

Das erfindungsgemäße Verfahren mit seiner einfachen Verfahrensführung wird in einer bevorzugten Ausgestaltung im folgenden für das Beispiel der Herstellung von 3-Chlorpropyltrichlorsilan (CPTCS) aus Trichlorsilan (TCS) und Allylchlorid (AC) näher beschrieben, ohne hierauf beschränkt zu sein. Vorzugsweise erfolgt erfindungsgemäß auch die kontinuierliche Herstellung von CPTCS durch Umsetzung von TCS mit AC bei Reaktionstemperaturen zwischen 60 °C und 160 °C, besonders bevorzugt bei Reaktionstemperaturen zwischen 80 und 140 °C, wobei die Verweilzeit des Reaktionsgemisches im Reaktor zwischen 1 min und 500 min, bevorzugt zwischen 10 min und 200 min, beträgt, um erfindungsgemäß einen Teilumsatz der Edukte von 10 % bis 80 %, bevorzugt von 30% bis 60 %, bezogen auf die Unterschußkomponente zu erzielen. Das molare Verhältnis von TCS zu AC im Eduktstrom beträgt vorzugsweise zwischen ca. 0,5 und 1,5, wobei ein AC-Überschuß besonders bevorzugt ist. Figur 1 zeigt das zugehörige Verfahrensschema.

Zur Hydrosilylierung wird z. B. ein Rührkessel- oder Festbettreaktor (C1) eingesetzt, in dem der erfindungsgemäße Teilumsatz der Edukte bezogen auf die Unterschußkomponente zwischen 10 und 80 %, vorzugsweise zwischen 30 und 60 %, über die Reaktionstemperatur und die Verweilzeit eingestellt wird. Dem Reaktor nachgeschaltet ist eine Trennstufe K1, in der das als Nebenprodukt entstehende Propen abgetrennt wird. Dadurch wird verhindert, daß das Propen mit dem Trichlorsilan in einer Folgereaktion zum unerwünschten Nebenprodukt Propyltrichlorsilan reagiert.

Das aus der Hydrosilylierungsreaktion stammende teilumgesetzte Reaktionsgemisch gelangt nach der Propen-Abtrennung (K1) in die Trennstufe K2, in der die nicht umgesetzten Edukte Allylchlorid und Trichlorsilan als Leichtsieder abgetrennt werden und mittels einer Kreislaufpumpe zum Hydrosilylierungsreaktor Cl zurückgeführt werden. Der Schwersiederstrom der K2 gelangt in die Trennstufe K3, in der die Nebenprodukte Propyltrichlorsilan und SiCl₄ als Leichtsieder abgetrennt werden und das Rohprodukt 3-Chlorpropyltrichlorsilan als Sumpfprodukt entnommen wird. Das Rohprodukt wird schließlich in der Trennstufe K4 feingereinigt, wonach das Produkt 3-Chlorpropyltrichiorsilan als Reinprodukt mit einer Reinheit > 99,9 mol-% erhalten wird. Die Feinreinigung erfolgt vorzugsweise durch Rektifikation und besonders bevorzugt durch Vakuumrektifikation des Produkts und dient der Abtrennung sonstiger Verunreinigungen, die z. B. noch aus den Edukten herrühren können.

Der Eduktstrom zum Hydrosilylierungsreaktor Cl, bestehend aus Allylchlorid und Trichlorsilan, wird vorzugsweise mengen- und verhältnisgeregelt dosiert. Hierzu wird zum einen die Zusammensetzung und die Größe des Kreislaufstromes an Allylchlorid und Trichlorsilan on-line gemessen, zum anderen wird mit Hilfe dieser Meßergebnisse die Dosierung der frischen Edukte Allylchlorid und Trichlorsilan aus den Vorratsbehältern vorgenommen. Hierdurch wird sichergestellt, daß ein Eduktstrom von konstanter Größe und konstanter Zusammensetzung dem Hydrosilylierungsreaktor zugeführt wird. Erfindungsgemäß ergibt sich der Vorteil, daß als Unnutzkomponente im Vergleich zu herkömmlichen Verfahren deutlich geringere Mengen an Propyltrichlorsilan gebildet werden. Es wird zwar etwa die gleiche Menge an SiCl₄ gebildet, weil die Bildung parallel zu der von CPTCS verläuft, aber die Folgereaktion (6) kann durch Teilumsatz der Edukte, durch Erhöhung der AC-Konzentration (AC-Überschuß) und durch Abtrennung von Propen unterdrückt werden. Dadurch wird weniger SiHCl₃ zum Unnutzprodukt PTCS umgesetzt. Weiterhin können größere Raumzeitausbeuten als in herkömmlichen Verfahren erzielt werden bei einem deutlich höheren molaren Verhältnis von 3-Chlorpropyltrichlorsilan zu Propyltrichlorsilan. In herkömmlichen Verfahren, die durch einen hohen Endumsatz von Allylchlorid gekennzeichnet sind, beträgt das molare Verhältnis von CPTCS zu PTCS im Produkt nur ca. 3,5, während beim erfindungsgemäßen Verfahren das Verhältnis in der Regel deutlich größer als 4, zum Teil sogar größer als 100, ist. Die Raumzeitausbeuten, die mit dem erfindungsgemäßen Verfahren erreicht werden können, liegen bereits bei einer Reaktionstemperatur von 100 °C bei bis zu 100 mol CPTCS/(h · g_{Pt}). In den nachfolgend näher beschriebenen Beispielen 1 und 2, die jeweils bei 80 °C Reaktionstemperatur durchgeführt werden, liegen die Raumzeitausbeuten bei 22,6 bzw. 40,25 mol CPTCS/(h g_{Pt}). In DE 41 19 994 A1 (Beispiel 6) liegt die Raumzeitausbeute dagegen lediglich bei 1,61 mol CPTCS/(h · g_{Pt}), in DE 34 04 703 A1 sogar nur zwischen 0,18 mol CPTCS/(h · g_{Pt}) (100 °C, Beispiel 1) und 0,52 mol CPTCS/(h · g_{Pt}) (100 °C, Beispiel 6). In Kenntnis dieser bevorzugten Verfahrensgestaltung ergeben sich für den Fachmann weitere Ausführungsformen des Verfahrens für die CPTCS-Herstellung.

Das erfindungsgemäße Verfahren kann analog zur CPTCS-Herstellung auch für die Herstellung von 3-Chlorpropyl-Methyldichlorsilan (CPMDCS) aus Methyldichlorsilan (MDCS) und Allylchlorid (AC) eingesetzt werden, wobei die Reaktionstemperatur zwischen 60 °C und 160 °C und die Verweilzeit des Reaktionsgemisches im Reaktor zwischen 1 min und 500 min, bevorzugt zwischen 10 min und 200 min, beträgt.

Das erfindungsgemäße Verfahren wird durch die nachfolgenden Beispiele näher **erläutert:**

### Beispiel 1: Umsetzung von Trichlorsilan (SiHCl₃) mit Allylchlorid zum 3-Chlorpropyltrichlorsilan mit 80 %-Umsatz ohne Propen-Abtrennung

In einem kontinuierlich betriebenen Kreislaufreaktor mit externem Kreislauf (Reaktorvolumen 1 000 ml, Katalysatorvolumen 120 ml) werden bei einer Reaktionstemperatur von 80 °C SiHCl₃ (TCS) und Allylchlorid (AC) zum 3-Chlorpropyltrichlorsilan (CPTCS) umgesetzt. Das molare Einsatzverhältnis von TCS : AC beträgt 1,2; Propen wird nicht abgetrennt, und der Umsatz von AC wird auf 80 % eingestellt. Die Masse des Katalysators (0,1 Gew.-% Pt auf Aktivkohle) beträgt 45 g. Der Kreislaufstrom beträgt 60 l/h, und damit ist die Kontaktzeit am Katalysator 7,2 s.

Der Druck im Reaktor beträgt 3,3 bar überdruck. Der Volumenstrom am Eingang zum Reaktor ist 0,343 l/h und besteht aus TCS und AC (TCS: 205 ml/h, AC: 138 ml/h). Die mittlere Verweilzeit im Reaktor beträgt somit 175 min. Die folgende Tabelle veranschaulicht die molare Zusammensetzung des Eingangs- und Ausgangsstroms.

| **Komponente** | **Eingang mol-%** | **Ausgang mol-%** |
|---|---|---|
| x(Trichlorsilan) | 0,5454 | 0,188 |
| x(Allylchlorid) | 0,4545 | 0,1365 |
| x(Siliciumtetrachlorid) | 0 | 0,134 |
| x(Propyltrichlorsilan) | 0 | 0,0842 |
| x(3-Chlor-Propyltrichlorsilan) | 0 | 0,4074 |
| x(Propen) | 0 | 0,0499 |

Die Molenströme der Si-Komponenten betragen am Ein- und Ausgang:

| **Komponente** | **Molstrom Eingang mol/h** | **Molstrom Ausgang mol/h** |
|---|---|---|
| Trichlorsilan | 2,03 | 0,47 |
| 3-Chlor-Propyltrichlorsilan | 0 | 1,02 |
| Propyltrichlorsilan | 0 | 0,21 |
| Siliciumtetrachlorid | 0 | 0,33 |

Somit ist das molare Verhältnis von CPTCS zu PTCS 4,85, die Produktionsleistung beträgt 216 g CPTCS/h bei gleichzeitiger Produktion von 37 g PTCS/h. In diesem Beispiel wird nur durch den Teilumsatz des Allylchlorids das Produktverhältnis zu Gunsten des CPTCS verschoben. Vom umgesetzten TCS entstehen 65,4 % CPTCS, 13,5% PTCS und 21,1 % SiCl₄.

Nach Auftrennung des den Reaktor verlassenden Produktgemisches werden 47 ml/h TCS und 27 ml/h AC mittels einer Pumpe zum Eingang des Reaktors zurückgeführt und mit frischen Edukten ergänzt; für TCS ist ein Volumenstrom von 158 ml/h und für AC ein Volumenstrom von 111 ml/h erforderlich, um das molare Verhältnis von TCS : AC von 1,2 wieder herzustellen.

### Beispiel 2: Umsetzung von Trichlorsilan (SiHCl₃) mit Allylchlorid zum 3-Chlorpropyltrichlorsilan mit 50%-Umsatz und kontinuierlicher Propen-Abtrennung

In einem kontinuierlich betriebenen Kreislaufreaktor mit externem Kreislauf (Reaktorvolumen 1 000 ml, Katalysatorvolumen 120 ml) werden bei einer Reaktionstemperatur von 80 °C SiHCl₃ (TCS) und Allylchlorid (AC) zum 3-Chlorpropyltrichlorsilan (CPTCS) umgesetzt. Das molare Einsatzverhältnis von AC : TCS beträgt 1,2; entstehendes Propen wird während des Betriebs durch Strippung mit Stickstoff kontinuierlich abgetrennt. Der Umsatz von TCS wird auf 50 % eingestellt. Die Masse des Katalysators (0,1 Gew.-% Pt auf Aktivkohle) beträgt 45 g. Der Kreislaufstrom beträgt 60 l/h, und damit ist die Kontaktzeit am Katalysator 7,2 s.

Der Druck im Reaktor beträgt 4,1 bar ü. Der Volumenstrom am Eingang zum Reaktor ist 1,0 l/h und besteht aus TCS und AC (TCS: 507 ml/h, AC: 493 ml/h). Die mittlere Verweilzeit im Reaktor beträgt somit 60 min. Die folgende Tabelle veranschaulicht die molare Zusammensetzung des Eingangs- und Ausgangsstroms.

| **Komponente** | **Eingang mol-%** | **Ausgang mol-%** |
|---|---|---|
| x(Trichlorsilan) | 0,4545 | 0,2732 |
| x(Allylchlorid) | 0,5454 | 0,3994 |
| x(Siliciumtetrachlorid) | 0 | 0,0663 |
| x(Propyltrichlorsilan) | 0 | 0,0151 |
| x(3-Chlor-Propyltrichlorsilan) | 0 | 0,2015 |
| x(Propen) | 0 | 0,0446 |

Die Molenströme der Si-Komponenten betragen am Ein- und Ausgang:

| **Komponente** | **Molstrom Eingang mol/h** | **Molstrom Ausgang mol/h** |
|---|---|---|
| Trichlorsilan | 5,06 | 2,53 |
| 3-Chlor-Propyltrichlorsilan | 0 | 1,81 |
| Propyltrichlorsilan | 0 | 0,13 |
| Siliciumtetrachlorid | 0 | 0,59 |

Somit ist das molare Verhältnis von CPTCS zu PTCS 13,3, die Produktionsleistung beträgt 384 g CPTCS /h bei gleichzeitiger Produktion von 23 g PTCS /h. Im Vergleich zum Beispiel 1 bewirken hier der AC-Überschuß, die Propen-Abtrennung und der verringerte Umsatz im Reaktor eine deutliche Selektivitätssteigerung. Das unerwünschte Nebenprodukt PTCS wird in seiner Menge drastisch reduziert. Vom umgesetzten TCS entstehen 71,5 % CPTCS, 5,2 % PTCS und 23,3 % SiCl₄.

Nach Auftrennung des den Reaktor verlassenden Produktgemisches werden 255 ml/h TCS und 295 ml/h AC mittels einer Pumpe zum Eingang des Reaktors zurückgeführt und mit frischen Edukten ergänzt; für TCS ist ein Volumenstrom von 252 ml/h und für AC ein Volumenstrom von 198 ml/h erforderlich, um das molare Verhältnis von AC : TCS von 1,2 wieder herzustellen.

Die folgende Tabelle faßt die Ergebnisse der Selektivitäten bezüglich des umgesetzten TCS aus den Beispielen 1 und 2 zusammen:

| **Komponente** | **Beispiel 1 Selektivität** | **Beispiel 2 Selektivität** |
|---|---|---|
| CPTCS | 65,4 % | 71,5 % |
| PTCS | 13,5 % | 5,2 % |
| SiCl₄ | 21,1 % | 23,3 % |

Die Vorzüge des erfindungsgemäßen Verfahrens in seinen bevorzugten Ausgestaltungen sind damit klar belegt.

## Patentansprüche

1. Verfahren zur kontinuierlichen Herstellung von 3-Halogen-Propyl-Organosilanen der allgemeinen Struktur
R_{b}H_{3-a-b}XₐSiCH₂CH₂CH₂Y (III),
wobei:
R für CH₃, C₂H₅, C₃H₇, OCH₃, OC₂H₅ oder OC₃H₇ steht,
X für F, Cl, Br oder I steht,
Y für F, Cl, Br oder I steht und wobei
a und b jeweils für eine der Zahlen 0, 1, 2 oder 3 stehen und in der Summe a + b gleich 1, 2 oder 3 sind,
durch Umsetzung eines Allylhalogenids mit einem wenigstens ein H-Atom tragenden Silan und Abtrennung von entstandenem Propen,
**dadurch gekennzeichnet,**
**daß** die Reaktion mit einem Teilumsatz der Edukte, bezogen auf die Unterschußkomponente, von 10 % bis 80 % durchgeführt wird.

2. Verfahren nach Anspruch 1,
**gekennzeichnet durch** einen Teilumsatz der Edukte von 30 % bis 60 %, bezogen auf die Unterschußkomponente.

3. Verfahren nach zumindest einem der vorherigen Ansprüche,
**gekennzeichnet durch** ein molares Verhältnis der Edukte Silan zu Allylhalogenid zwischen 0,5 und 1,5.

4. Verfahren nach Anspruch 3,
**gekennzeichnet durch** ein molares Verhältnis der Edukte Silan zu Allylhalogenid zwischen 0,5 und 1.

5. Verfahren nach zumindest einem der vorherigen Ansprüche,
**dadurch gekennzeichnet,**
**daß** die nicht umgesetzten Edukte aus dem Produktgemisch abgetrennt und zur Reaktion zurückgeführt werden.

6. Verfahren nach zumindest einem der vorherigen Ansprüche,
**dadurch gekennzeichnet,**
**daß** die.Reaktion heterogen-katalytisch erfolgt.

7. Verfahren nach zumindest einem der vorherigen Ansprüche,
**dadurch gekennzeichnet,**
**daß** die Reaktion in flüssiger Phase bei Temperaturen zwischen 60 °C und 160 °C erfolgt.

8. Verfahren nach Anspruch 7,
**dadurch gekennzeichnet,**
**daß** die Reaktion in flüssiger Phase bei Temperaturen zwischen 80 °C und 140 °C erfolgt.

9. Verfahren nach zumindest einem der vorherigen Ansprüche,
**dadurch gekennzeichnet,**
**daß** der Teilumsatz der Edukte, ausgehend von der Reaktionskinetik und der Katalysatormenge, durch Vorgabe der Reaktionstemperatur und/oder der Verweilzeit des Reaktionsgemisches im Reaktor eingestellt wird.

10. Verfahren nach zumindest einem der vorherigen Ansprüche zur kontinuierlichen Herstellung von 3-Chlorpropyltrichlorsilan durch Umsetzung von Allylchlorid mit Trichlorsilan,
**dadurch gekennzeichnet,**
**daß** die Reaktion bei einer Temperatur zwischen 60 °C und 160 °C und einer Verweilzeit des Reaktionsgemisches im Reaktor zwischen 1 min und 500 min durchgeführt wird.

11. Verfahren nach zumindest einem der vorherigen Ansprüche zur kontinuierlichen Herstellung von 3-Chlorpropyl-Methyldichlorsilan durch Umsetzung von Allylchlorid mit Methyl-Dichlorsilan,
**dadurch gekennzeichnet,**
**daß** die Reaktion bei einer Temperatur zwischen 60 °C und 160 °C und einer Verweilzeit des Reaktionsgemisches im Reaktor zwischen 1 min und 500 min durchgeführt wird.

## Claims

1. A process for the continuous preparation of a 3-halo-propylorganosilane of the general structure
R_{b}H_{3-a-b}XₐSiCH₂CH₂CH₂Y (III),
where:
R is CH₃, C₂H₅, C₃H₇, OCH₃, OC₂H₅ or OC₃H₇,
X is F, Cl, Br or I,
Y is F, Cl, Br or I and where
a and b are each one of the numbers 0, 1, 2 or 3 and the sum a + b is 1, 2 or 3,
by reacting an allyl halide with a silane carrying at least one H atom and separating propene formed,
**characterized in that**
the reaction is carried out with a partial conversion of from 10 % to 80 % of the reactants, based on the deficient component.

2. A process according to claim 1,
**characterized by** a partial conversion of from 30 % to 60 % of the reactants, based on the deficient component.

3. A process according to at least one of the preceding claims,
**characterized in that** the molar ratio of the reactants silane to allyl halide is from 0.5 to 1.5.

4. A process according to claim 3,
**characterized in that** the molar ratio of the reactants silane to allyl halide is from 0.5 to 1.

5. A process according to at least one of the preceding claims,
**characterized in that**
the unconverted reactants are separated from the product mixture and are recycled into the reaction.

6. A process according to at least one of the preceding claims,
**characterized in that**
the reaction is performed by heterogeneous catalysis.

7. A process according to at least one of the preceding claims,
**characterized in that**
the reaction is performed in the liquid phase at temperatures of from 60°C to 160°C.

8. The process according to claim 7,
**characterized in that**
the reaction is performed in the liquid phase at temperatures of from 80°C to 140°C.

9. A process according to at least one of the preceding claims,
**characterized in that**
the degree of partial conversion of the reactants is set, on the basis of the reaction kinetics and the amount of catalyst, by presetting the reaction temperature and/or the residence time of the reaction mixture in the reactor.

10. A process according to at least one of the preceding claims for the continuous preparation of 3-chloropropyltrichlorosilane by reacting allyl chloride with trichlorosilane,
**characterized in that**
the reaction is carried out at a temperature of from 60°C to 160°C and a residence time of the reaction mixture in the reactor of from 1 min to 500 min.

11. A process according to at least one of the preceding claims for the continuous preparation of 3-chloropropyl-methyldichlorosilane by reacting allyl chloride with methyl-dichlorosilane,
**characterized in that**
the reaction is carried out at a temperature of from 60°C to 160°C and a residence time of the reaction mixture in the reactor of from 1 min to 500 min.

## Revendications

1. Procédé de préparation en continu de 3-halogéno propyl organo silanes de structure générale:
R_{b}H_{3-a-b}XₐSiCH₂CH₂CH₂Y (III),
dans laquelle :
R représente CH₃, C₂H₅, C₃H₇, OCH₃, OC₂H₅ ou OC₃H₇
X représente F, CI, Br ou I
Y représente F, Cl, Br ou I et
a et b représentent respectivement un des nombres 0, 1, 2 ou 3 et globalement a + b est égal à 1, 2 ou 3,
par réaction d'un halogénure d'alkyl avec un silane qui porte au moins un atome d'hydrogène et séparation du propène qui s'est formé,
**caractérisé en ce que**
la réaction avec une conversion particlle de l'éduit - rapporté aux composants de trame - est exécutée de 10 à 80 %.

2. Procédé selon la revendication 1,
**caractérisé par**
une conversion partielle des éduits de 30 à 60 % rapporté aux composants de trame.

3. Procédé selon au moins une des revendications précédentes,
**caractérisé par**
un rapport molaire des éduits de silane à l'halogénure d'alkyle, compris entre 0,5 et 1,5.

4. Procédé selon la revendication 3,
**caractérisé par**
un rapport molaire des éduits de silane à l'halogénure d'alkyle compris cntre 0,5 et 1.

5. Procédé selon au moins une des revendications précédentes,
**caractérisé en ce que**
les éduits qui n'ont pas réagi sont séparés du mélange de produit et sont ramenés à la réaction.

6. Procédé selon au moins l'une des revendications précédentes,
**caractérisé en ce que**
la réaction s'effectue par catalyse hétérogène.

7. Procédé selon au moins l'une des revendications précédentes,
**caractérisé en ce que**
la réaction s'effectue en phase liquide à des températures comprises entre 60 et 160°C.

8. Procédé selon la revendication 7,
**caractérisé en ce que**
la réaction s'effectue en phase liquide à des températures comprises entre 80 et 140°C.

9. Procédé selon au moins l'une des revendications précédentes,
**caractérisé en ce que**
la conversion partielle des éduits - en partant de la cinétique de réaction et de la quantité de catalyseur - est ajustée par régulation de la température de réaction et/ou du temps de séjour du mélange dans le réacteur.

10. Procédé selon au moins l'une des revendications précédentes pour la préparation en continu de 3-chloro-propyl trichloro silane par réaction de chlorure d'allyle avec le trichloro-silane,
**caractérisé en ce que**
la réaction s'effectue à une température comprise entre 60°C et 160°C, et pour un temps de séjour du mélange réactionnel dans le réacteur entre 1 min et 500 minutes.

11. Procédé selon au moins l'une des revendications précédentes de préparation en continu de 3-chloro-propyl-méthyl-dichloro-silane par réaction de chlorure d'allyle et de méthyl-dichloro-silane,
**caractérisé en ce que**
la réaction s'effectue à une température comprise entre 60°C et 160°C et pour un temps de séjour du mélange réactionnel dans le réacteur compris entre 1 min et 500 min.
